# EUROPÄISCHE PATENTSCHRIFT

(11) **EP 1 588 621 B1**
(45) Veröffentlichungstag und Bekanntmachung des Hinweises auf die Patenterteilung: **11.07.2007**
(21) Anmeldenummer: 04009427.8
(22) Anmeldetag: 21.04.2004
(51) Int. Cl.: A22C 11/10

(54) **Vorrichtung zum Befüllung von Wursthüllen**
Device for stuffing sausage casings
dispositif de bourrage de boyaux de saucisses

(43) Veröffentlichungstag der Anmeldung: 26.10.2005
(73) Patentinhaber: Albert Handtmann Maschinenfabrik GmbH & Co. KG, 88400 Biberach (DE)
(72) Erfinder: Müller, Gerhard, 88433 Schemmerhofen (DE)
(74) Vertreter: Grünecker, Kinkeldey, Stockmair & Schwanhäusser Anwaltssozietät

(56) Entgegenhaltungen:
- EP-A- 0 868 852
- DE-A- 10 015 893
- DE-B- 1 187 150
- US-A- 3 739 426

## Beschreibung

Die Erfindung betrifft eine Vorrichtung zum Befüllen von Wursthüllen gemäß dem Oberbegriff des Anspruchs 1.

Bei der automatischen Wurstherstellung werden Füllmaschinen eingesetzt. Solche Füllmaschine weisen ein Füllrohr auf, durch das das Brät in die Wursthülle eingebracht wird. Die Wursthülle befindet sich dazu vorher im gerafften Zustand direkt auf diesem Füllrohr oder auf einer Hülse, die über das Füllrohr geschoben worden ist. Am Ende des Füllrohres befindet sich eine sogen. "Darmbremse" bzw. ein Bremsring. Nach dem Ausstoß einer gewünschten Menge Wurstbrät aus dem Füllrohr in die Wursthülle wird diese mit Hilfe eines Bremsringes und einer Abdrehvorrichtung abgedreht. Eine solche Füllmaschine ist z.B. in dem europäischen Patent Nr. 0232 812 beschrieben.

Ist die geraffte Wursthülle auf dem Füllrohr oder der Hülse aufgebraucht, so muss eine neue geraffte Wursthülle aufgebracht werden. Dazu muss das Bremsringgehäuse vom Ende des Füllrohres entfernt werden. In dem europäischen Patent Nr. 0232 812 ist dazu ein entsprechender Mechanismus vorgesehen, mit dessen Hilfe das Bremsringgehäuse axial vom Füllrohr weggefahren und dann nach unten verschwenkt werden kann, also um eine im Wesentlichen parallel zur Füllrohrachse weisende Schwenkachse.

Zur Erzeugung von Würsten gleicher Länge kann der Ausstoßvorrichtung ein Längengerät nachgeschaltet werden. Dieses Längengerät ist eine separate Einheit, die vor der Wurstmaschine platziert wird und die mit Hilfe von Förderbändern die gefüllte Wursthülle intermittierend abzieht. Zur Steuerung sind z.B. elektrische Leitungen vorgesehen, die das Längengerät mit der Füllmaschine verbinden. Durch Regelung der Geschwindigkeit dieses Längengerätes lässt sich die Länge der einzelnen Würste bestimmen. Soll nun eine neue geraffte Wursthülle bzw. eine neue Hülse mit einer gerafften Wursthülle auf das Füllrohr aufgebracht werden, so muss nicht nur das Bremsringgehäuse vom Ende des Füllrohres entfernt werden, sondern auch das Längengerät. Dies ist umständlich und zeitraubend. Andere Lösungen schlagen vor, das Füllrohr horizontal zu verfahren bzw. zu verfahren und zu verschwenken. Diese Lösungen sind, insbesondere wenn Naturdarm aufgezogen werden soll, sehr aufwendig.

Aus der EP 0 868 852 A2 ist eine Maschine zum Herstellen von Würsten mit verdrillte Hülle bekannt.

Ausgehend von dem oben geschilderten Stand der Technik ist es die Aufgabe der Erfindung, eine Vorrichtung zum Befüllen von Wursthüllen zur Verfügung zu stellen, bei der es trotz Verwendung eines Längengerätes einfach und schnell möglich ist, eine neue geraffte Wursthülle aufzubringen.

Diese Aufgabe wird durch eine gattungsgemäße Vorrichtung zum Befüllen von Wursthüllen gelöst, die die Merkmale des kennzeichnenden Teiles des Anspruchs 1 hat.

Bei der erfindungsgemäßen Vorrichtung wird das Längengerät zum kontrollierten Abführen der gefüllten Wursthülle, das sich in Arbeitsposition an das Bremsringgehäuse anschließt, durch die Verschwenkung des Bremsringgehäuses aus der Arbeitsposition gleichzeitig mit verschwenkt, wodurch das Aufbringen einer neuen Wursthülle stark vereinfacht wird. Das Längengerät muss nicht extra entfernt werden, sondern wird durch Verschwenkung des Bremsringgehäuses gleichzeitig mit weggeschwenkt. Entfernung des Längengerätes und Wegschwenken des Bremsringgehäuses stellen also nur noch einen gemeinsamen Arbeitsvorgang dar, was zu einer großen Zeitersparnis führt. Außerdem ist die gesamte Wurstfüllvorrichtung einschließlich des Längengerätes kompakter und platzsparender als eine Wurstfüllmaschine mit einem separaten Längengerät. Das Füllrohr muss in seiner Position nicht verändert werden, so dass ein Aufbringen einer neuen Wursthülle einfach erfolgen kann.

Vorteilhafterweise wird das Längengerät von einer Übertragungsvorrichtung bzw. einem Getriebe angetrieben, das seinerseits von einem Antrieb innerhalb der Füllmaschine angetrieben wird. Eine Verlagerung des Antriebes des Längengerätes in die Füllmaschine führt zu einer weiteren Platzersparnis und einer Vereinfachung des Wegschwenkvorganges, da nur geringe Massen beim Verschwenken transportiert werden müssen, wenn die Schwenkmasse des Längengerätes keinen Antrieb mit umfasst. Zusätzlich wird durch diese Maßnahme die Betriebssicherheit erhöht, da keine elektrischen Zuführungen mehr aus der Füllmaschine zu dem Längengerät vorliegen müssen.

Einfacherweise wird dabei die Übertragungsvorrichtung durch die Haltevorrichtung des Bremsringgehäuses hindurchgeführt.

Eine gleichzeitige Verschwenkung des Längengerätes und des Bremsringgehäuses lässt sich vorteilhafterweise realisieren, indem das Längengerät so an dem Bremsringgehäuse angeordnet ist, dass es sich relativ zu dem Bremsringgehäuse bei der gemeinsamen Schwenkbewegung nicht bewegt.

Gemäß einer vorteilhaften Ausgestaltung weist die erfindungsgemäße Vorrichtung einen Schwenkhebelmechanismus zur Verschwenkung der Haltevorrichtung des Bremsringgehäuses aus der Arbeitsposition auf. Dieser Schwenkhebelmechanismus kann vorteilhafterweise auch direkt zur Verschwenkung des Längengerätes dienen.

Gemäß einer vorteilhaften Weiterbildung schwenkt die Haltevorrichtung für das Bremsringgehäuse um eine vertikale Achse. Das Längengerät kann dabei so mit der Haltevorrichtung verbunden werden, dass es um dieselbe vertikale Achse verschwenkt wird. Eine Verschwenkung um eine vertikale Achse erleichtert den Schwenkvorgang zusätzlich, da beim Schwenkvorgang keine Höhendifferenz überwunden werden muss.

Gemäß einer Ausgestaltung der Erfindung umfasst die Übertragungsvorrichtung zwischen dem Antrieb innerhalb der Füllmaschine und dem Längengerät eine Zahnkupplung, die eine Verbindung herstellt, wenn das Längengerät in seine Arbeitsposition geschwenkt wird. Derartige Zahnkupplungen ermöglichen eine einfache und sichere Verbindung, die beim Wegschwenken der jeweiligen Elemente leicht lösbar ist.

Vorteilhafterweise kann in dem Bremsringgehäuse ein drehbarer Bremsring vorgesehen sein, der über eine Zahnkupplung, die beim Schwenken der Haltevorrichtung für das Bremsringgehäuse in Arbeitsposition eingreift, mit einem Bremsringantrieb verbunden wird. Eine solche Zahnkupplung ermöglicht eine leichte und sichere Verbindung des zu drehenden Bremsrings, ohne dass bei der Verschwenkbewegung eine große Masse bewegt werden muss, die durch einen mitbewegten Antrieb entstehen würde.

Zur weiteren Vereinfachung kann eine Vorrichtung vorgesehen sein, mit deren Hilfe es möglich ist, vor der Schwenkbewegung des Längengerätes und der Haltevorrichtung aus ihrer Arbeitsposition eine Bewegung parallel zum Füllrohr durchzuführen.

Weitere vorteilhafte Ausgestaltungen ergeben sich aus den übrigen Unteransprüchen.

Eine erfindungsgemäße Vorrichtung wird im Folgenden anhand der anliegenden Zeichnungen erläutert. Dort zeigt
- Figur 1: den Ausstoßbereich einer erfindungsgemäßen Vorrichtung in Seitenansicht,
- Figur 2: den Ausstoßbereich einer erfindungsgemäßen Vorrichtung in Arbeitsstellung in Draufsicht, und
- Figur 3: den Ausstoßbereich einer erfindungsgemäßen Vorrichtung mit weggeschwenkter Haltevorrichtung und weggeschwenktem Längengerät in Draufsicht.

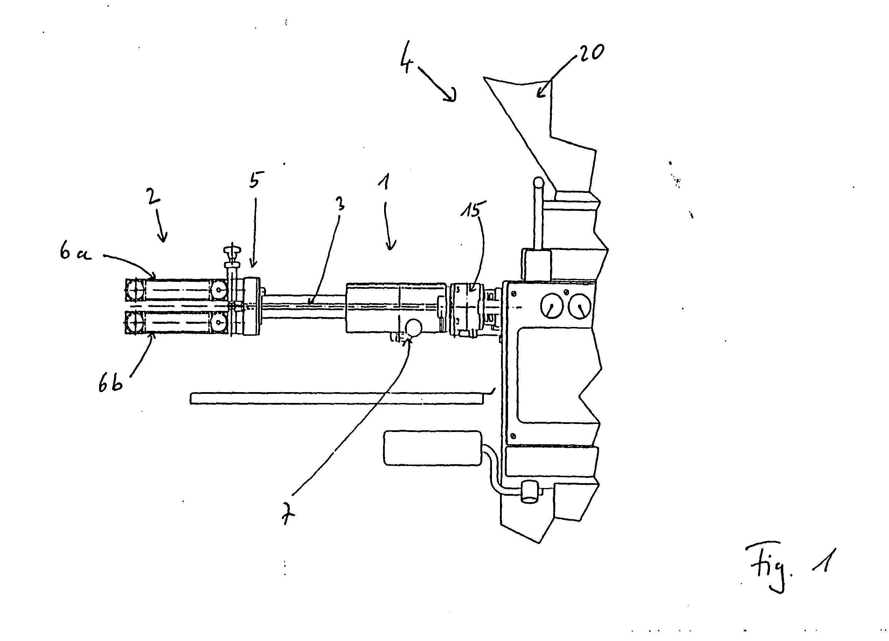

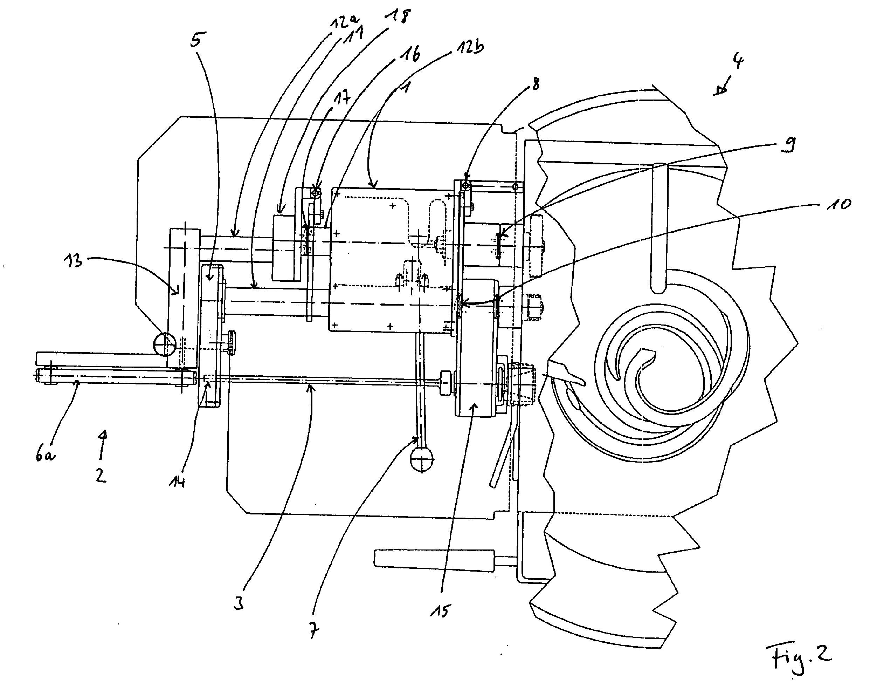

In Figur 1 ist eine Teilansicht einer erfindungsgemäßen Vorrichtung von der Seite gezeigt. Mit 4 ist eine Füllmaschine bezeichnet. Die Füllmaschine 4 umfasst einen Fülltrichter 20 und ein Abdrehgetriebe 15. Aus dem Abdrehgetriebe 15 ragt ein Füllrohr 3 in horizontaler Richtung, das mit Hilfe des Abdrehgetriebes 15 drehbar ist. Wie aus der Draufsicht (Fig. 2) erkennbar ist, befindet sich neben dem Füllrohr 3 eine Haltevorrichtung 1 mit einem Bremsringgehäuse 5. Das Bremsringgehäuse 5 weist in einer Öffnung einen nicht näher dargestellten Bremsring auf, der in Arbeitsstellung des Bremsringgehäuses 5 das Ende 14 des Füllrohres 3 umschließt. Der Bremsring kann mit Hilfe eines Antriebes, der z.B. in der Füllmaschine 4 angeordnet ist, über eine Übertragungswelle 11 drehbar angetrieben werden. Die Übertragungswelle 11 erstreckt sich durch die Haltevorrichtung 1.

An der Haltevorrichtung 1 ist ein Längengerät 2 mit Förderbändern 6a und 6b zum Abziehen der Wursthülle von dem Füllrohr 3 angeordnet. Die Endlosbänder 6a und 6b dienen zum Halten und Transportieren der gefüllten Wursthülle, während das Abdrehgetriebe 15 eine Wurst abdreht. Der Abstand der Endlosbänder ist über eine nicht gezeigte Gewindespindel mit Griff auf unterschiedliche Wurstkaliber einstellbar. Zum Antrieb der Endlosbänder 6a und 6b befindet sich in dem Gehäuse 13 ein nicht näher dargestelltes Übertragungsgetriebe, das über Wellen 12a, 12b von einem separaten Antrieb angetrieben wird, der sich z.B. in der Füllmaschine 4 befinden kann.

Die Rotation der Welle 12 b kann in dem Gehäuse 18 über Riemen, Zahnräder oder Ähnliches auf zwei Wellen 12 a übertragen werden, wobei jede der Wellen 12 a eines der Bänder 6a, 6b antreiben kann. Dazu ist in dem Gehäuse 13 z.B. je ein Kegelradgetriebe vorgesehen, um die Rotationsbewegung um eine horizontale Achse in eine Rotationsbewegung von Wellen um je eine senkrecht dazu verlaufende Achse umzusetzen. Die sich um diese Achsen drehenden Wellen in dem Gehäuse 13 sind mit den Umlenkrollen der Förderbänder 6a, 6b gekoppelt.

Bei der gezeigten Ausführungsform kann das gesamte Längengerät mit der Welle 12a bzw. den Wellen 12b um eine Achse 16 weggeschwenkt werden, z. B. wenn eine Reinigung oder Wartung notwendig ist. Dazu ist eine Zahnkupplung 17 vorgesehen, um die Welle 12b zu trennen. Durch eine nicht gezeigte Befestigungsvorrichtung wird das Längegerät während des Betriebes mit dem Bremsringgehäuse verkoppelt.

Alternativ zu der beschriebenen Ausführungsform kann das Längengerät 2 direkt am Bremsringgehäuse befestigt werden. Auch in diesem Fall kann eine zusätzliche Verschwenkmöglichkeit vorgesehen sein, um Reinigungs- und Wartungsarbeiten zu erleichtern. Die Antriebswelle 12a, 12b, die das Übertragungsgetriebe 13 mit dem Antrieb für das Längengerät verbindet, kann in diesem Fall einstückig ausgebildet sein.

Die Wellen 11 bzw. 12b sind durch Zahnkupplungen 10 bzw. 9 unterbrochen, die in Eingriff stehen, wenn Haltevorrichtung 1, Bremsringgehäuse 5 und Längengerät 2 in Arbeitsstellung sind, wie es in Figur 2 gezeigt ist. Bezugszeichen 8 bezeichnet die vertikale Achse, um die die Haltevorrichtung 1, das Bremsringgehäuse 5 und das Längengerät 2 mit den Übertragungswellen 11 und 12a, 12b zusammen verschwenkt werden können. Dazu dient ein Schwenkhebel 7.

Ebenso kann das Verschwenken mit Hilfe eines Antriebs erfolgen. Der Schwenkhebel 7 kann dann entfallen oder auch als zusätzliche manuelle Verstellmöglichkeit beibehalten werden. Mechanismus hierzu ist so ausgebildet, dass eine Rotation der Welle 11 in der Richtung, wie sie zum Abdrehen verwendet wird, bezüglich des Verschwenkens keine weitere Funktion hat, jedoch bei einer Drehung in der Gegenrichtung das Verschwenken erfolgt. Dazu kann um die Welle 11 herum ein Tragrohr vorgesehen sein. An dieses Tragrohr ist über einen Freilauf eine Gewindemutter gekoppelt. Durch die Gewindemutter ragt die Welle 11 mit einem zu der Gewindemutter passenden Gewindeteil.

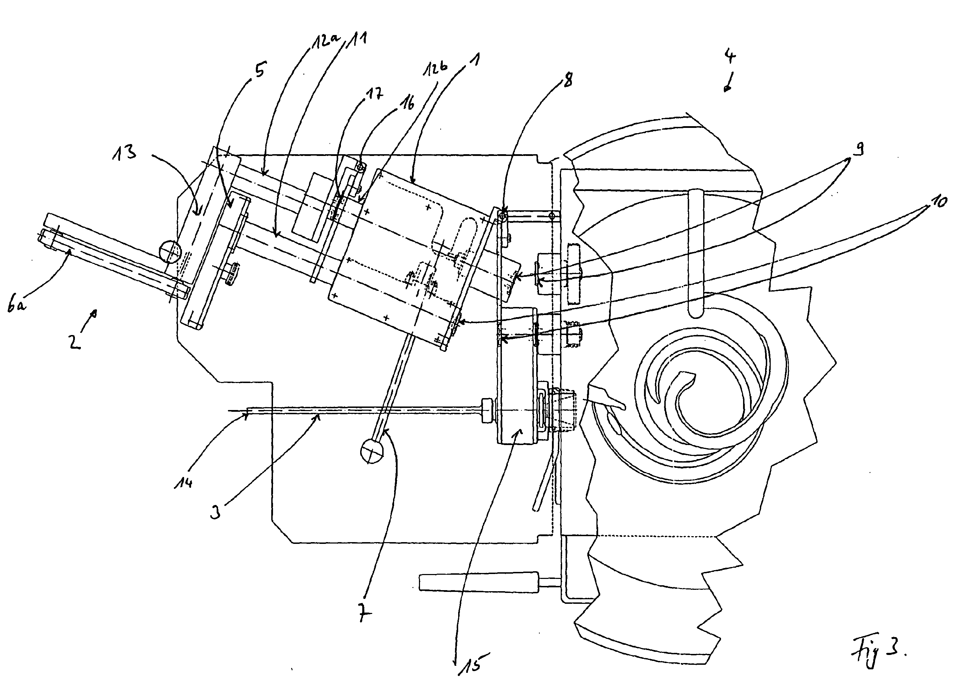

Der verschwenkte Zustand ist in Figur 3 gezeigt.

Der Betrieb einer derartigen erfindungsgemäßen Wurstfüllmaschine wird im Folgenden beschrieben.

Zu Beginn eines Arbeitsvorganges muss eine Darmraupe auf das Füllrohr aufgezogen werden. Hierzu wird dann zunächst mit Hilfe des Schwenkhebels 7 die Haltevorrichtung 1, das Bremsringgehäuse 5 und das Längengerät 2 nach hinten verschwenkt (Fig. 3). Dabei werden die Übertragungswellen 11 und 12b an den Zahnkupplung 10 bzw. 9 getrennt. Das Ende 14 des Füllrohres 3 liegt nun frei. Auf das Füllrohr kann nun eine geraffte Wursthülle aufgebracht werden, die befüllt werden soll.

Mit Hilfe des Schwenkhebels 7 wird nun die Haltevorrichtung 1, das Bremsringgehäuse 5 und das Längengerät 2 in Arbeitsposition zurückgeschwenkt, wie es in Figur 2 gezeigt ist.

Wurstbrät wird durch den Trichter 20 in die Füllmaschine 4 eingebracht. Durch nicht näher dargestellte, bekannte Mittel, z.B. einer Flügelzellenpumpe innerhalb der Füllmaschine, wird das Wurstbrät durch das Füllrohr 3 ausgepresst. Die geraffte Wursthülle, deren Ende verschlossen ist, wird durch das ausgestoßene Wurstbrät abgezogen und gefüllt. Nach dem Ausstoßen einer gewünschten voreingestellten Portion wird das Füllrohr 3 durch das Abdrehgetriebe 15 um die eigene Achse gedreht, um eine Einschnürung der abgefüllten Portion zu erreichen. Das abgedrehte Ende der vorhergehenden Wurst bildet dabei den Anfang der folgenden Wurst.

Der Bremsring in der Durchgangsöffnung 21 des Bremsringgehäuses 5 bremst die Wursthülle in ihrer Abzugsbewegung etwas und sorgt für die notwendige Spannung der zu füllenden Wursthülle. Damit das Füllrohr 3 beim Abdrehvorgang nicht durchrutscht, ohne die Wursthülle mitzunehmen, kann der Bremsring außerdem über die Übertragungswelle 11 angetrieben werden, z.B. mit der Drehgeschwindigkeit des Füllrohres 3.

Ist die geraffte Wursthülle auf dem Füllrohr verbraucht, so wird mit Hilfe des Schwenkhebelmechanismus 7 das Bremsringgehäuse vom Ende 4 des Füllrohrs 3 weggeschwenkt. Da das Längengerät an dem Bremsringgehäuse angeordnet ist, wird dieses zusammen mit dem Bremsringgehäuse weggeschwenkt, so dass in einem Arbeitsgang Längengerät und Bremsringgehäuse verschwenkt werden und damit einfach und schnell das freie Ende 14 des Füllrohres 3 frei zu liegen kommt. Da die Verschwenkung um einer vertikale Achse 8 erfolgt, kann der Schwenkvorgang nahezu kraftfrei erfolgen. Insbesondere ist es nicht notwendig, das Gewicht des Bremsringgehäuses anzuheben, wie das der Fall ist, wenn das Bremsringgehäuse um eine horizontale Achse, wie im Stand der Technik, nach unten verschwenkt wird. Insgesamt erlaubt die erfindungsgemäße Vorrichtung ein schnelles und einfaches Aufbringen einer neuen gerafften Wursthülle, wobei der Wechselvorgang kraftsparend und schnell durchgeführt werden kann. Der Antrieb des Längengerätes 2 kann sich innerhalb der Füllmaschine befinden, muss also nicht mit verschwenkt werden, was die Bedienbarkeit weiter erleichtert.

Abweichend von der dargestellten Ausführungsform wäre es auch denkbar, das Längengerät z.B. über Tragarme an der Füllmaschine zu befestigen und über Mitnehmer beim Schwenkvorgang des Bremsringgehäuses das Längengerät mitzuführen. Bei einer Ausführungsform, bei der das Füllrohr weit in das Bremsringgehäuse hineinragt und somit durch eine einfache Schwenkbewegung u.U. das Bremsringgehäuse nicht vom vorderen Ende des Füllrohres frei kommt, kann es auch vorgesehen sein, das Wegschwenken in einer überlagerten Bewegung durchzuführen, wobei zunächst eine Translationsbewegung in Füllrohrverlaufsrichtung erfolgt und danach erst die Schwenkbewegung einsetzt. In jedem Falle wird das Längengerät dann bei dieser Bewegung automatisch mitgeführt, wenn es am Bremsringgehäuse angeordnet ist.

Falls das Verschwenken nicht von Hand erfolgen soll, kann wie folgt vorgegangen werden.

Die Welle 11 rotiert normal in einer Richtung, die beim Abdrehen verwendet wird. Dabei dreht sich die Mutter mit der Welle 11, da der Freilauf nicht sperrt. Rotiert die Welle 11 in der Gegenrichtung, so will sich die Mutter in der Gegenrichtung drehen, wodurch sie jedoch durch den Freilauf, der dann sperrt, gehindert wird. Folglich verfährt die Mutter und damit das Tragrohr horizontal. Diese Horizontalbewegung kann zum Verschwenken von den Einrichtungen wie etwa Haltevorrichtung 1, Bremsringgehäuse 5 und Längengerät 2 genutzt werden.

Dann kann eine neue Darmraupe aufgezogen werden.

Das Zurückschwenken kann automatisch oder manuell mit dem Schwenkhebel 7 erfolgen. Um eine beim automatischen Zurückschwenken entstehende Quetschgefahr zu vermeiden, wird das manuelle Zurückschwenken bevorzugt.

Der Vorteil dieser Alternative ist, dass das Verschwenken mittels eines Kniehebels (Hebel, der mit dem Knie des Bedieners betätigt werden kann) gesteuert werden kann, da mit dem Kniehebel der Motorantrieb der Welle 11 gesteuert werden kann. Dadurch hat der Bediener die Hände frei, um die Wursthülle aufzuziehen, da die Hände nicht zum Bedienen des Schwenkhebels 7 benötigt werden.

## Patentansprüche

1. Vorrichtung zum Befüllen von Wursthüllen, mit einer Füllmaschine mit einem Füllrohr und einer Haltevorrichtung, die ein Bremsringgehäuse trägt, das sich am Ende des Füllrohres befindet, wenn es in einer Arbeitsposition ist und aus der Arbeitsposition weggeschwenkt werden kann, um das Ende des Füllrohres freizugeben, und mit
einem Längengerät (2) zum kontrollierten Abführen der gefüllten Wursthüllen, das sich in Arbeitsposition an das Bremsringgehäuse (5) anschließt wobei
das Längengerät mit der Füllmaschine derart verbunden ist, dass es beim Verschwenken des Bremsringgehäuses (5) aus der Arbeitsposition gleichzeitig mit verschwenkt wird,
**dadurch gekennzeichnet, dass**
das Längengerät (2) von einer Übertragungsvorrichtung (12a, 12b, 13) angetrieben wird, die ihrerseits von einem Antrieb innerhalb der Füllmaschine (4) angetrieben wird.

2. Vorrichtung nach Anspruch 1,
**dadurch gekennzeichnet, dass**
die Übertragungsvorrichtung (12) durch die Haltevorrichtung (1) des Bremsringgehäuses (5) hindurch geführt ist.

3. Vorrichtung nach einem der Ansprüche 1 oder 2,
**dadurch gekennzeichnet, dass**
das Längengerät (2) so mit Bezug zu dem Bremsringgehäuse (5) angeordnet ist, dass es sich bei der gemeinsamen Schwenkbewegung relativ zum Bremsringgehäuse nicht bewegt.

4. Vorrichtung nach einem der Ansprüche 1 bis 3,
**gekennzeichnet durch**
einen Schwenkhebelmechanismus (7) zur Verschwenkung der Haltevorrichtung (1) aus der Arbeitsposition.

5. Vorrichtung nach Anspruch 4,
**dadurch gekennzeichnet, dass**
der Schwenkhebelmechanismus (7) auch zur Verschwenkung des Längengerätes (2) dient.

6. Vorrichtung nach einem der Ansprüche 1 bis 3,
**dadurch gekennzeichnet, dass**
ein Mechanismus zum Verschwenken der Haltevorrichtung (1) bei einer Rotationsumkehr einer Welle, die von einem Motor angetrieben ist, vorgesehen ist.

7. Vorrichtung nach Anspruch 6,
**dadurch gekennzeichnet, dass**
der Mechanismus einen Freilauf aufweist, der mit einer Mutter gekoppelt ist, durch die die Welle mit einem Gewindeteil verläuft.

8. Vorrichtung nach einem der Ansprüche 1 bis 7,
**gekennzeichnet durch**
eine vertikale Achse (8), um die die Haltevorrichtung (1) für das Bremsringgehäuse (5) verschwenkt wird.

9. Vorrichtung nach Anspruch 8,
**dadurch gekennzeichnet, dass**
das Längengerät (2) um dieselbe vertikale Achse (8) verschwenkt wird, um die die Haltevorrichtung (1) verschwenkbar ist.

10. Vorrichtung nach Anspruch 1,
**gekennzeichnet durch**
eine Zahnkupplung (9), die beim Schwenken des Längengerätes (2) in Arbeitsposition eine Verbindung zwischen Längengerät (2) und Antrieb herstellt.

11. Vorrichtung nach einem der Ansprüche 1 bis 10,
**dadurch gekennzeichnet,**
**dass** in dem Bremsringgehäuse (5) ein drehbarer Bremsring vorgesehen ist, der über eine Zahnkupplung (9), die beim Schwenken der Haltevorrichtung (1) für das Bremsringgehäuse (5) in Arbeitsposition eingreift, mit einem Bremsringantrieb verbunden wird.

12. Vorrichtung nach einem der vorherigen Ansprüche,
**dadurch gekennzeichnet, dass**
vor der Schwenkbewegung eine Bewegung des Bremsringgehäuses (5) und des Längengerätes (2) in Richtung parallel zum Füllrohr (3) durchführbar ist.

## Claims

1. Apparatus for filling sausage casings, having a filling machine with a filling pipe and a holding device which carries a brake ring housing which is located at the end of the filling pipe when it is in a working position and can be pivoted out of the working position to release the end of the filling pipe, and having a lengthening device (2) for controlled removal of the filled sausage casings, which in the working position adjoins the brake ring housing (5), the lengthening device being connected to the filling machine so as to be pivoted simultaneously with pivoting of the brake ring housing (5) out of the working position,
**characterised in that**
the lengthening device (2) is driven by a transfer device (12a, 12b, 13) which is in turn driven by a drive within the filling machine (4).

2. Apparatus according to claim 1,
**characterised in that**
the transfer device (12) is passed through the holding device (1) of the brake ring housing (5).

3. Apparatus according to either of claims 1 or 2,
**characterised in that**
the lengthening device (2) is arranged in such a way in relation to the brake ring housing (5) that it does not move relative to the brake ring housing during the common pivot movement.

4. Apparatus according to any of claims 1 to 3,
**characterised by**
a pivot lever mechanism (7) for pivoting the holding device (1) out of the working position.

5. Apparatus according to claim 4,
**characterised in that**
the pivot lever mechanism (7) also serves to pivot the lengthening device (2).

6. Apparatus according to any of claims 1 to 3,
**characterised in that**
a mechanism is provided for pivoting the holding device (1) during a reversal of rotation of a shaft which is driven by a motor.

7. Apparatus according to claim 6,
**characterised in that**
the mechanism comprises a freewheel which is coupled to a nut through which the shaft passes with a threaded portion.

8. Apparatus according to any of claims 1 to 7,
**characterised by**
a vertical axis (8) about which the holding device (1) for the brake ring housing (5) is pivoted.

9. Apparatus according to claim 8,
**characterised in that**
the lengthening device (2) is pivoted about the same vertical axis (8) about which the holding device (1) is pivotable.

10. Apparatus according to claim 1,
**characterised by**
a gear coupling (9) which makes a connection between lengthening device (2) and drive when the lengthening device (2) pivots into the working position.

11. Apparatus according to any of claims 1 to 10,
**characterised in that**
in the brake ring housing (5) is provided a rotatable brake ring which is connected to a brake ring drive by a gear coupling (9) which engages when the holding device (1) for the brake ring housing (5) pivots into the working position.

12. Apparatus according to any of the preceding claims,
**characterised in that**,
before the pivot movement, a movement of the brake ring housing (5) and of the lengthening device (2) in a direction parallel to the filling pipe (3) can be performed.

## Revendications

1. Dispositif de bourrage de boyaux de saucisses, comprenant une machine de remplissage avec un tube de remplissage et un dispositif de maintien, qui supporte un carter de bague de freinage situé sur l'extrémité du tube de remplissage, lorsqu'il se situe dans une position de travail et peut être pivoté à l'écart de la position de travail, pour dégager l'extrémité du tube de remplissage, et comprenant un appareil de mise à longueur (2) pour l'évacuation contrôlée des boyaux de saucisses bourrés, lequel appareil se raccorde dans la position de travail au carter de bague de freinage (5), l'appareil de mise à longueur étant raccordé à la machine de remplissage de telle sorte qu'il pivote simultanément hors de la position de travail avec le pivotement du carter de bague de freinage (5),
**caractérisé en ce que**
l'appareil de mise à longueur (2) est entraîné par un dispositif de transmission (12a, 12b, 13), qui est entraîné pour sa part par une commande à l'intérieur de la machine de remplissage (4).

2. Dispositif suivant la revendication 1, **caractérisé en ce que** le dispositif de transmission (12) est guidé au travers du dispositif de maintien (1) du carter de bague de freinage (5).

3. Dispositif suivant l'une des revendications 1 et 2, **caractérisé en ce que** l'appareil de mise à longueur (2) est disposé par rapport au carter de bague de freinage (5) de sorte qu'il ne se déplace pas lors du mouvement de pivotement commun par rapport au carter de bague de freinage.

4. Dispositif suivant l'une des revendications 1 à 3, **caractérisé par** un mécanisme à levier pivotant (7) pour le pivotement du dispositif de maintien (1) hors de la position de travail.

5. Dispositif suivant la revendication 4, **caractérisé en ce que** le mécanisme à levier pivotant (7) sert également au pivotement de l'appareil de mise à longueur (2).

6. Dispositif suivant l'une des revendications 1 à 3, **caractérisé en ce qu'**il est prévu un mécanisme pour le pivotement du dispositif de maintien (1) lors d'une inversion de rotation d'un arbre, entraîné par un moteur.

7. Dispositif suivant la revendication 6, **caractérisé en ce que** le mécanisme présente une roue libre couplée à un écrou, au travers duquel s'étend l'arbre par une partie filetée.

8. Dispositif suivant l'une des revendications 1 à 7, **caractérisé par** un axe vertical (8) autour duquel pivote le dispositif de maintien (1) pour le carter de la bague de freinage (5).

9. Dispositif suivant la revendication 8, **caractérisé en ce que** l'appareil de mise à longueur (2) pivote autour du même axe vertical (8) que celui autour duquel peut pivoter le dispositif de maintien (1).

10. Dispositif suivant la revendication 1, **caractérisé par un** accouplement à dents (9), qui réalise lors du pivotement de l'appareil de mise à longueur (2) dans la position de travail une liaison entre l'appareil de mise à longueur (2) et la commande.

11. Dispositif suivant l'une des revendications 1 à 10, **caractérisé en ce qu'**il est prévu dans le carter de bague de freinage (5) une bague tournante, laquelle est raccordée à une commande de bague de freinage par l'intermédiaire d'un accouplement à dents (9), qui s'engage lors du pivotement du dispositif de maintien (1) pour le carter de bague de freinage (5) dans la position de travail.

12. Dispositif suivant l'une des revendications précédentes, **caractérisé en ce que,** avant le mouvement de pivotement, un déplacement du carter de bague de freinage (5) et de l'appareil de mise à longueur (2) est réalisable dans la direction parallèle au tube de remplissage (3).
